# EUROPEAN PATENT SPECIFICATION

(11) **EP 3 021 558 B1**
(45) Date of publication and mention of the grant of the patent: **27.11.2019**
(21) Application number: 14779161.0
(22) Date of filing: 01.04.2014
(51) Int. Cl.: H04L 29/06, H04L 29/08, H04W 76/16, H04W 84/12, H04W 88/06

(54) **SWITCHING METHOD FOR NETWORK INTERFACES, ACCESS DEVICE AND COMPUTER STORAGE MEDIUM**
VERMITTLUNGSVERFAHREN FÜR NETZWERKSCHNITTSTELLEN, ZUGANGSVORRICHTUNG UND COMPUTERSPEICHERMEDIUM
PROCÉDÉ DE COMMUTATION POUR INTERFACES RÉSEAU, DISPOSITIF D'ACCÈS ET SUPPORT DE STOCKAGE INFORMATIQUE

(30) Priority: 10.07.2013 CN 201310289291
(43) Date of publication of application: 18.05.2016
(73) Proprietor: ZTE Corporation, Shenzhen, Guangdong 518057 (CN)
(72) Inventor: LIU, Weipeng, Shenzhen Guangdong 518057 (CN)
(74) Representative: Herzog IP Patentanwalts GmbH
(86) International application number: PCT/CN2014/074563
(87) International publication number: WO 2014/161478

(56) References cited:
- EP-A2- 1 915 014
- CN-A- 1 717 112
- CN-A- 1 717 112
- CN-A- 102 045 776
- CN-A- 102 665 142
- US-A1- 2006 084 417
- US-A1- 2007 270 135
- US-A1- 2011 095 905
- US-B1- 6 965 948
- US-B2- 8 190 768
- MAKAYA C ET AL: "Adaptive handoff scheme for heterogeneous IP wireless networks", COMPUTER COMMUNICATIONS, ELSEVIER SCIENCE PUBLISHERS BV, AMSTERDAM, NL, vol. 31, no. 10, 25 June 2008 (2008-06-25) , pages 2094-2108, XP022700465, ISSN: 0140-3664, DOI: 10.1016/J.COMCOM.2008.01.055 [retrieved on 2008-02-06]

## Description

### TECHNICAL FIELD

The present disclosure relates to a network interface switching technology in the field of communications, and in particular to a switching method for network interfaces, an access device and a computer storage medium.

### BACKGROUND

With the rapid development of Internet, particularly with the rapid service development and popularization of 2^{nd} Generation (2G)/3^{rd} Generation (3G)/4^{th} Generation (4G) and Wireless Local Area Networks (WLAN), a Mini Fidelity (MIFI) apparatus and a Customer Premise Equipment (CPE) which serve as communication terminals which are easier to be carried, can provide a network access function for one or more users. The users can access a network anytime and anywhere via such equipment. Thus, such equipment is more widely applied and become important internet-surfing communication tools of business people. Meanwhile, with the continuous development of related technologies such as hardware, communication terminal equipment trends to be compatible with more complicated functions, more interfaces and the like gradually. Currently, many MIFI and CPE terminal equipment has been capable of supporting the access of 2G/3G/4G network interfaces, WLAN interfaces and wired network interfaces, and the users can access a network in any network environment by only one of such products, thereby greatly improving the utilization rate of the terminal equipment and the experiences of the users.

However, the current terminal equipment supporting multiple network interfaces generally only provides corresponding switching pages where users need to manually select corresponding interfaces for switching; better terminal equipment may be added with some simple priority processing such as WLAN priority processing, and when the equipment detects that an assigned WLAN signal exists, the network interface may be automatically switched to the WLAN. But due to the fact that a true network environment is relatively complicated, there may appear situations that a WLAN signal exists but cannot be connected or data access cannot be normally performed after connection, and an address cannot be obtained or numbers cannot be dialled after wired connection, and the abovementioned abnormal situations cannot be detected and eliminated by manual switching or simple priority processing of the users, so that the users cannot normally access the network, and have to manually re-switch to the network interfaces which run previously. The complexity of use of terminal equipment with multiple network interfaces is improved, and a larger negative impact is brought to the normal use of the users and the experiences of the users. In order to accelerate the application and popularization of such equipment and reduce the use difficulty of the users, it is urgently needed to search for some more-automatic and intelligent methods or solutions to solve the abovementioned problems.

US 6965948 B1 discloses a method and apparatus for providing selective access to a network, between an end device and a network such as the Internet through one or more access network terminating devices includes: determining an access capability for each access network terminating device and comparing the access capability with a preferred access capability associated with a user preference. Best access is determined based on a comparison of the capabilities of the access network terminating devices and the preferred capabilities. Once a match is found, one of the access network terminating devices is selected based on the comparison and the end device is configured according to the access capability of the selected one of the access network terminating devices. Access capabilities include, for example, cost of access, coverage area, and QoS.

US 2011/0095905 A1 discloses: an assigning unit assigns multiple conditions to communication units, a detection unit detects which of the communication units is communicable with an external resource center; when the detection unit detects that multiple communication units are communicable with the external resource center, a selecting unit selects one communication unit according to the multiple conditions assigned by the assigning unit.

US 2006/0084417 A1 discloses an arrangement that enables a mobile device to manage multiple network interfaces in order to be substantially always reachable on the Internet. Wired LAN, Wireless LAN, Wireless PAN and cellular systems are technologies that are employed in the exemplary embodiment described. Scanning of the available network infrastructures is performed by a specific software agent implemented in a mobile device.

US 8190768 A2 discloses a terminal device including multiple interfaces having links to various networks. When a trigger event occurs, the terminal device selects a target link to a network to transition from its current link. A candidate link selection function determines candidate links that are filtered to remove links not meeting connectivity criteria. A target link selection function is then executed to select a target link from the filtered candidate links.

US 2007/0270135 A1 discloses a method for selecting a carrier for wireless communication of a mobile electronic terminal device that can execute wireless online game applications by exchanging communication data with at least one remotely located device by using any of a plurality of distinct communication carriers.

EP 1915014 A2 discloses a method for deciding a handover of a mobile terminal based on context information in a network environment, including: receiving context information from the terminal and networks; evaluating selection priorities of network interfaces for each transmission path for each application program based on the context information; and obtaining a handover decision value for selecting a best network interface from among the networks by applying a cost function to the evaluated selection priority.

CN 1717112 A discloses a mobile node which can handover automatically to a appropriate interface, which includes: a generating unit, configured to generate control information for each interface; an communicating unit, configured to report the control information for each interface to an up-level layer; and an path controlling unit, configured to perform at least of connectivity confirmation and path update according to the control information.

MAKAYA C ET AL: "Adaptive handoff scheme for heterogeneous IP wireless networks", discloses selecting an appropriate interface to ensure that a mobile node remains connected to the network.

### SUMMARY

In order to solve the abovementioned technical problems, according to embodiments of the present disclosure, a switching method for network interfaces, an access device and a computer storage medium are provided.

A switching method for network interfaces, provided by an embodiment of the present disclosure, is applicable to an access device containing at least two network interfaces and may include:
detecting a connected state of the at least two network interfaces so as to determine valid network interfaces; and
when it is determined that priority of a currently accessed valid network interface is lower than priority of other valid network interfaces, performing network interface switching according to a preset switching policy,
the preset switching policy may include: taking a highest-priority network interface in the other valid network interfaces as a network interface to be switched;
taking the highest-priority network interface in the other valid network interfaces as the network interface to be switched may include:
   when a bandwidth supported by the currently accessed valid network interface is lower than a bandwidth needed by a current service, taking a highest-priority network interface, which supports a bandwidth higher than the bandwidth needed by the current service, in the other valid network interfaces as the network interface to be switched; or,
   when bandwidths supported by the valid network interfaces are all higher than a bandwidth needed by a current service, taking an interface, which supports a network with a lowest rate standard, in the valid network interfaces as the network interface to be switched; or,
   when bandwidths supported by the valid network interfaces are all higher than a bandwidth needed by a current service and the rate standards of networks supported by the valid network interfaces are the same, taking an interface, which supports a highest bandwidth, in the valid network interfaces as the network interface to be switched.

Before the connected state of the at least two network interfaces is detected, the method may further include:
detecting whether the at least two network interfaces are in a connectable state, wherein the connectable state may include: a state that a 2G/3G/4G communication card has been inserted, or a state that a Wireless Local Area Network (WLAN) has searched out a wireless signal of an access point, or a state that a wired interface has been connected.

Determining the valid network interfaces may include:
sending a request message to an access network side; and
after a response message about the request message returned by the access network side is received, determining that the detected network interfaces are the valid network interfaces.

The priority of the network interfaces may be determined according to at least one piece of following information:
bandwidth information of the network interfaces, rate standard information of networks supported by the network interfaces, and network mode information of the networks supported by the network interfaces.

The network interfaces may include: 2G/3G/4G interfaces, WLAN interfaces or wired network interfaces.

According to an embodiment of the present disclosure, an access device is provided, which may include a first detecting unit and a switching unit, wherein
the first detecting unit may be configured to detect a connected state of at least two network interfaces so as to determine valid network interfaces; and
the switching unit may be configured to, when determining that priority of a currently accessed valid network interface is lower than priority of other valid network interfaces, perform network interface switching according to a preset switching policy,
the switching unit may be further configured to take a highest-priority network interface in the other valid network interfaces as a network interface to be switched when determining that the priority of the currently accessed valid network interface is lower than the priority of the other valid network interfaces;
the switching unit may be further configured to take a highest-priority network interface, which supports a bandwidth higher than the bandwidth needed by the current service, in the other valid network interfaces as the network interface to be switched when a bandwidth supported by the currently accessed valid network interface is lower than a bandwidth needed by a current service; or,
take an interface, which supports a network with a lowest rate standard, in the valid network interfaces as the network interface to be switched when bandwidths supported by the valid network interfaces are all higher than a bandwidth needed by a current service; or,
take an interface, which supports a highest bandwidth, in the valid network interfaces as the network interface to be switched when bandwidths supported by the valid network interfaces are all higher than a bandwidth needed by a current service and the rate standards of networks supported by the valid network interfaces are the same.

The access device may further include a second detecting unit configured to detect whether the at least two network interfaces are in a connectable state, wherein the connectable state may include: a state that a 2G/3G/4G communication card has been inserted, or a state that a WLAN has searched out a wireless signal of an access point, or a state that a wired interface has been connected.

The first detecting unit may include a sending sub-unit, a receiving sub-unit and a determining sub-unit, wherein
the sending sub-unit may be configured to send a request message to an access network side;
the receiving sub-unit may be configured to notify the determining sub-unit after a response message about the request message returned by the access network side is received; and
the determining sub-unit may be configured to determine that the detected network interfaces are the valid network interfaces after the notification from the receiving sub-unit is received.

The priority of the network interfaces may be determined according to at least one piece of following information:
bandwidth information of the network interfaces, rate standard information of networks supported by the network interfaces, and network mode information of the networks supported by the network interfaces.

The network interfaces may include: 2G/3G/4G interfaces, WLAN interfaces or wired network interfaces.

According to an embodiment of the present disclosure, a computer storage medium is provided, which may store a computer program, the computer program being configured to execute the switching method for the network interfaces.

In the technical solutions of the embodiments of the present disclosure, the connected states of at least two network interfaces are detected so as to determine valid network interfaces; and when it is determined that the priority of a currently accessed valid network interface is lower than the priority of other valid network interfaces, network interface switching is performed according to a preset switching policy. Thus, a network interface can be effectively switched according to a switching policy in a complicated network environment.

### BRIEF DESCRIPTION OF THE DRAWINGS

Fig. 1 is an implementation flow diagram of a switching method for network interfaces according to an embodiment of the present disclosure;
Fig. 2 is a structural diagram of an access device according to an embodiment of the present disclosure; and
Fig. 3 is a structural diagram of a first detecting sub-unit in an access device according to an embodiment of the present disclosure.

### DETAILED DESCRIPTION

In order to understand characteristics and technical contents of the embodiments of the present disclosure in more detail, the implementation of the embodiments of the present disclosure is described below with reference to the drawings in detail, and the drawings only provide references and cannot be used to limit the embodiments of the present disclosure.

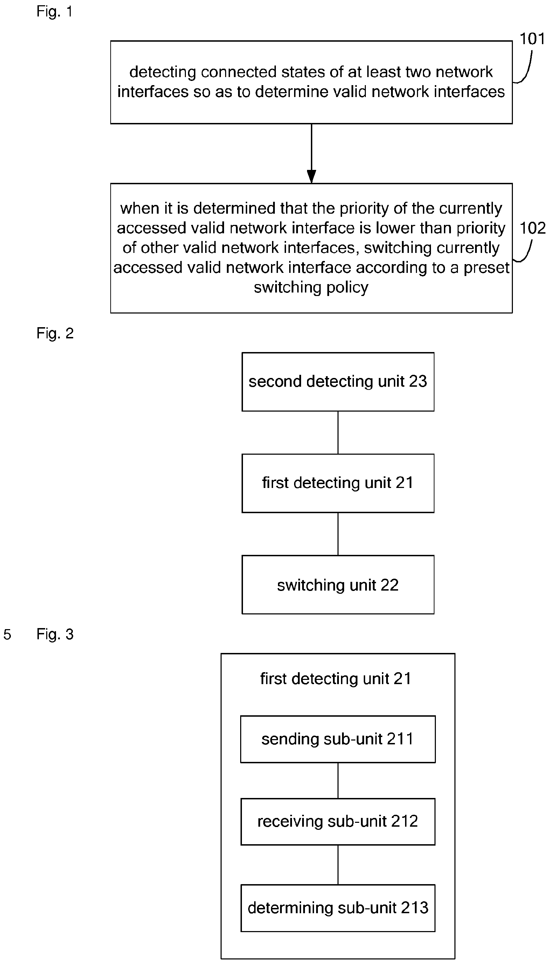

An embodiment of the present disclosure provides a switching method for network interfaces. As shown in Fig. 1, the method includes the following steps.

Step 101: connected states of at least two network interfaces are detected so as to determine valid network interfaces.

Herein, the at least two network interfaces are at least two network interfaces of an access device, such as at least two network interfaces of an MIFI device, or at least two network interfaces of a CPE.

Herein, the network interfaces include: 2G/3G/4G interfaces, WLAN interfaces or wired network interfaces.

In terms of the 2G/3G/4G interface, communication is mainly achieved by an access device via a 2G/3G/4G mobile network, and such an interface requires a device to perform operations firstly such as network searching, Access Point Name (APN) setting and networking dialling so as to implement communications.

In terms of the WLAN interface, communication is mainly achieved by an access device via a WIFI network of a WLAN, and such an interface generally requires firstly judging whether an assigned WIFI is in an available range, performing authentication connection if it is determined that the assigned WIFI is in the available range, and obtaining an Internet Protocol (IP) address after connection succeeds.

In terms of the wired interface, communication is mainly achieved by an access device via a network card interface (RJ45) access fixed network, and the communication can be performed under the condition that address acquiring or dialling is performed after an access device is connected with such an interface.

Due to the fact that the stability of a wired network is higher than that of the WLAN, the communication rate of WLAN is higher than that of a 2G/3G/4G network and the rate is lower, the priority of the wired interfaces, the WLAN interfaces and the 2G/3G/4G interfaces are generally set to be sequenced from high to low.

Preferably, before the connected states of the at least two network interfaces are detected, the method further includes:
detecting whether the at least two network interfaces are in connectable states, wherein the connectable state includes: a state that a 2G/3G/4G communication card has been inserted, or a state that WLAN has searched out a wireless signal of an access point, or a state that a wired interface has been connected.

Specifically, the 2G/3G/4G interfaces may detect whether 2G/3G/4G communication cards such as SIM cards have been inserted currently; preferably, the 2G/3G/4G interfaces also need to detect whether Personal Identification Numbers (PINs) are opened for the 2G/3G/4G communication cards, whether the 2G/3G/4G communication cards successfully perform network searching, whether 2G/3G/4G signal strengths are high enough and whether dialling can succeed.

The WLAN interfaces may detect whether the assigned WIFI is in a range, whether access can be successfully authenticated and whether an IP address can be successfully obtained after access;

The wired interfaces may detect whether cables are inserted in or plugged out; and preferably, the wired interfaces also need to detect whether a Dynamic Host Configuration Protocol (DHCP) can be successfully allocated or whether dialling can succeed based on a Point to Point Protocol Over Ethernet (PPPOE).

Preferably, determining the valid network interfaces includes:
sending a request message to an access network side; and
after a response message about the request message returned by the access network side is received, determining that the detected network interfaces are the valid network interfaces.

Preferably, the request message may be a heartbeat request message, and the response message may be a corresponding heartbeat response message.

The network side may be implemented as a heartbeat detection server. Specifically, the heartbeat detection server is a server deployed on the internet, which can provide keep-alive heartbeat service for a device, and an access device may detect whether a current network is connectable and accessible by sending the heartbeat request message to the server. Specifically, a keep-alive heartbeat detection mechanism may start the monitoring service of a User Datagram Protocol (UDP) or a Transmission Control Protocol (TCP) on the server, and may define the format of a communication message. Accordingly, a unit sending the heartbeat request message needs to be arranged in the access device, and the format of the message, defined by the server, is used. Generally, the format of the message is as shown in Table 1.

**Table 1**

| Message format | Message type | Message length | Network interface type | Message time | Others |
|---|---|---|---|---|---|
| Value content | Request/response | Unit: byte | 2G/3G/4G, WLAN or wired network | Standard time format | |

Communication is performed in a manner of asking and answering interchangeably, and is actively initiated by the access device. When the heartbeat detection server receives the heartbeat request message from the access device, a corresponding heartbeat response message is generated and returned to the access device, and after the access device receives the heartbeat response message, the network is considered to be in a connected state.

Thus, in the connected state, data transmission can be performed between the access device and the network via a network interface.

Step 102: when it is determined that the priority of the currently accessed valid network interface is lower than the priority of other valid network interfaces, network interface switching is performed according to a preset switching policy.

Herein, the priority of the network interfaces is determined according to at least one piece of following information:
bandwidth information of the network interfaces, rate standard information of networks supported by the network interfaces, and network mode information of the networks supported by the network interfaces.

Herein, the bandwidth information of the network interfaces can be acquired via a File Transfer Protocol (FTP) or a Hypertext Transport Protocol (HTTP) or in other manners.

Preferably, in order to be capable of detecting the bandwidth information of the network interfaces more accurately, the bandwidth information of the network interfaces can be detected by starting a plurality of threads while performing downloading for a certain time; and moreover, in the situation that there are different network interfaces, different pieces of detection service can be selected to ensure the accuracy of detection data.

In an embodiment, the switching policy may be configured via a web corresponding to the access device. Generally, when the access device is delivered, the switching policy is configured by a manufacturer as a default configuration.

Preferably, the preset switching policy includes: taking a highest-priority network interface in other valid network interfaces as a network interface to be switched.

Preferably, taking the highest-priority network interface in other valid network interfaces as the network interface to be switched includes:
when a bandwidth supported by the currently accessed valid network interface is lower than a bandwidth needed by a current service, taking the highest-priority network interface, which supports a bandwidth higher than the bandwidth needed by the current service, in said other valid network interfaces as the network interface to be switched; or,
when bandwidths supported by the valid network interfaces are all higher than a bandwidth needed by a current service, taking an interface, which supports a network with a lowest rate standard, in the valid network interfaces as the network interface to be switched; or,
when bandwidths supported by the valid network interfaces are all higher than a bandwidth needed by a current service and the rate standards of networks supported by the valid network interfaces are the same, taking an interface, which supports a highest bandwidth, in the valid network interfaces as the network interface to be switched.

Preferably, in a switching process, relevant switching operations such as route changing and Network Address Translation (NAT) need to be performed.

Aiming at the switching method for the network interfaces, an embodiment of the present disclosure further provides an access device. As shown in Fig. 2, the access device includes a first detecting unit 21 and a switching unit 22, wherein
the first detecting unit 21 is configured to detect connected states of at least two network interfaces so as to determine valid network interfaces; and
the switching unit 22 is configured, when determining that priority of a currently accessed valid network interface is lower than priority of other valid network interfaces, perform network interface switching according to a preset switching policy.

Preferably, the access device further includes a second detecting unit 23;
the second detecting unit 23 is configured to detect whether the at least two network interfaces are in a connectable state, wherein the connectable state includes: a state that a 2G/3G/4G communication card has been inserted, or a state that a WLAN has searched out a wireless signal of an access point, or a state that a wired interface has been connected.

Preferably, as shown in Fig. 3, the first detecting unit 21 includes a sending sub-unit 211, a receiving sub-unit 212 and a determining sub-unit 213, wherein
the sending sub-unit 211 is configured to send a request message to an access network side;
the receiving sub-unit 212 is configured to notify the determining sub-unit after a response message about the request message returned by the access network side is received; and
the determining sub-unit 213 is configured to determine that the detected network interfaces are the valid network interfaces after the notification from the receiving sub-unit is received.

Preferably, the priority of the network interfaces is determined according to at least one piece of following information:
bandwidth information of the network interfaces, rate standard information of networks supported by the network interfaces, and network mode information of the networks supported by the network interfaces.

Preferably, the switching unit 22 is further configured to take a highest-priority network interface in the other valid network interfaces as a network interface to be switched when determining that the priority of the currently accessed valid network interface is lower than the priority of the other valid network interfaces.

Specifically, the switching unit 22 is further configured to take a highest-priority network interface, which supports a bandwidth higher than the bandwidth needed by the current service, in said other valid network interfaces as the network interface to be switched when a bandwidth supported by the currently accessed valid network interface is lower than a bandwidth needed by a current service; or,
take an interface, which supports a network with a lowest rate standard, in the valid network interfaces as the network interface to be switched when bandwidths supported by the valid network interfaces are all higher than a bandwidth needed by a current service; or,
take an interface, which supports a highest bandwidth, in the valid network interfaces as the network interface to be switched when bandwidths supported by the valid network interfaces are all higher than a bandwidth needed by a current service and the rate standards of networks supported by the valid network interfaces are the same.

In the solutions, the network interfaces include: 2G/3G/4G interfaces, WLAN interfaces or wired network interfaces.

Those skilled in the art should understand that functions implemented by all the units and the sub-units thereof in the access device as shown in Fig. 2 and Fig. 3 can be understood with reference to the relevant description of the switching method for the network interfaces. The functions implemented by all the units and the sub-units thereof in the access device as shown in Fig. 2 can be implemented via a program running on a processor, or can be implemented via a specific logic circuit.

In practical application, the first detecting unit 21, the switching unit 22 and the second detecting unit 23 in the access device may be implemented by a Central Processing Unit (CPU) or a Digital Signal Processor (DSP) or a Field-Programmable Gate Array (FPGA) in the access device.

If the functions implemented by the first detecting unit 21, the switching unit 22 and the second detecting unit 23 in the access device according to an embodiment of the present disclosure are implemented as a software function module and are sold or used as independent products, the products can also be stored in a computer readable storage medium. Based on this understanding, the technical solutions of an embodiment of the present disclosure can be substantially embodied in a form of a software product or parts contributing to the conventional art can be embodied in a form of a software product, and a computer software product is stored in a storage medium, which includes a plurality of instructions enabling a computer device which may be a personal computer, a server or a network device to execute all or part of the method according to each embodiment of the present disclosure. The storage medium includes various types of media capable of storing program codes, such as a U disk, a mobile hard disk, a Read Only Memory (ROM), a disk or an optical disc. Thus, the embodiments of the present disclosure are not limited to combination of any specific hardware and software.

Accordingly, an embodiment of the present disclosure further provides a computer storage medium. A computer program is stored in the computer storage medium and is configured to execute the switching method for the network interfaces according to an embodiment of the present disclosure.

The above is only better embodiments of the present disclosure, and is not used for limiting the protection scope of the present disclosure.

## Claims

1. A switching method for network interfaces, applicable to an access device containing at least two network interfaces, the method comprising:
detecting (101) connected states of the at least two network interfaces so as to determine valid network interfaces; and
when it is determined that priority of a currently accessed valid network interface is lower than priority of other valid network interfaces, performing (102) network interface switching according to a preset switching policy,
wherein the preset switching policy comprises: taking a highest-priority network interface in the other valid network interfaces as a network interface to be switched;
**characterized in that**, taking the highest-priority network interface in the other valid network interfaces as the network interface to be switched comprises:
when a bandwidth supported by the currently accessed valid network interface is lower than a bandwidth needed by a current service, taking a highest-priority network interface, which supports a bandwidth higher than the bandwidth needed by the current service, in the other valid network interfaces as the network interface to be switched; or,
when bandwidths supported by valid network interfaces are all higher than a bandwidth needed by a current service, taking an interface, which supports a network with a lowest rate standard, in the valid network interfaces as the network interface to be switched; or,
when bandwidths supported by the valid network interfaces are all higher than a bandwidth needed by a current service and rate standards of networks supported by the valid network interfaces are the same, taking an interface, which supports a highest bandwidth, in the valid network interfaces as the network interface to be switched.

2. The switching method according to claim 1, before the connected states of the at least two network interfaces is detected, the method further comprising:
detecting whether the at least two network interfaces are in a connectable state, wherein the connectable state comprises: a state that a 2G/3G/4G communication card has been inserted, or a state that a Wireless Local Area Network, WLAN, has searched out a wireless signal of an access point, or a state that a wired interface has been connected.

3. The switching method according to claim 1 or 2, wherein determining the valid network interfaces comprises:
sending a request message to an access network side; and
after a response message about the request message returned by the access network side is received, determining that the detected network interfaces are the valid network interfaces.

4. The switching method according to claim 1, wherein the priority of the network interfaces is determined according to at least one piece of following information:
bandwidth information of the network interfaces, rate standard information of networks supported by the network interfaces, and network mode information of the networks supported by the network interfaces.

5. The switching method according to claim 2, wherein the network interfaces comprise: 2G/3G/4G interfaces, WLAN interfaces or wired network interfaces.

6. An access device, comprising a first detecting unit and a switching unit, wherein
the first detecting unit (21) is configured to detect connected states of at least two network interfaces so as to determine valid network interfaces; and
the switching unit (22) is configured to, when determining that priority of a currently accessed valid network interface is lower than priority of other valid network interfaces, perform network interface switching according to a preset switching policy, wherein the switching unit is further configured to take a highest-priority network interface in the other valid network interfaces as a network interface to be switched when determining that the priority of the currently accessed valid network interface is lower than the priority of the other valid network interfaces; **characterized in that**, the switching unit is further configured to take a highest-priority network interface, which supports a bandwidth higher than the bandwidth needed by the current service, in the other valid network interfaces as the network interface to be switched when a bandwidth supported by the currently accessed valid network interface is lower than a bandwidth needed by a current service; or,
take an interface, which supports a network with a lowest rate standard, in the valid network interfaces as the network interface to be switched when bandwidths supported by the valid network interfaces are all higher than a bandwidth needed by a current service; or,
take an interface, which supports a highest bandwidth, in the valid network interfaces as the network interface to be switched when bandwidths supported by the valid network interfaces are all higher than a bandwidth needed by a current service and rate standards of networks supported by the valid network interfaces are the same.

7. The access device according to claim 6, further comprising a second detecting unit (23) configured to detect whether the at least two network interfaces are in a connectable state, wherein the connectable state comprises: a state that a 2G/3G/4G communication card has been inserted, or a state that a Wireless Local Area Network, WLAN, has searched out a wireless signal of an access point, or a state that a wired interface has been connected.

8. The access device according to claim 6 or 7, wherein the first detecting unit (21) comprises a sending sub-unit (211), a receiving sub-unit (212) and a determining sub-unit (213), wherein
the sending sub-unit is configured to send a request message to an access network side;
the receiving sub-unit is configured to notify the determining sub-unit after a response message about the request message returned by the access network side is received; and
the determining sub-unit is configured to determine that the detected network interfaces are the valid network interfaces after the notification from the receiving sub-unit is received.

9. The access device according to claim 6, wherein the priority of the network interfaces is determined according to at least one piece of following information:
bandwidth information of the network interfaces, rate standard information of networks supported by the network interfaces, and network mode information of the networks supported by the network interfaces.

10. The access device according to claim 7, wherein the network interfaces comprise: 2G/3G/4G interfaces, WLAN interfaces or wired network interfaces.

11. A computer storage medium, storing computer executable instructions configured to execute the switching method for the network interfaces according to any one of claims 1 to 5.

## Patentansprüche

1. Umschaltverfahren für Netzwerkschnittstellen, anwendbar auf eine Zugriffsvorrichtung, die mindestens zwei Netzwerkschnittstellen enthält, wobei das Verfahren umfasst:
Erfassen (101) von verbundenen Zuständen der mindestens zwei Netzwerkschnittstellen, um gültige Netzwerkschnittstellen zu bestimmen; und
wenn bestimmt wird, dass die Priorität einer aktuell zugegriffenen gültigen Netzwerkschnittstelle niedriger ist als die Priorität anderer gültiger Netzwerkschnittstellen, Durchführen (102) einer Netzwerkschnittstellenumschaltung gemäß einer voreingestellten Umschaltrichtlinie,
wobei die voreingestellte Umschaltrichtlinie umfasst:
Beanspruchen einer Netzwerkschnittstelle mit der höchsten Priorität in den anderen gültigen Netzwerkschnittstellen als eine Netzwerkschnittstelle, die umgeschaltet werden soll;
**dadurch gekennzeichnet, dass**
das Beanspruchen der Netzwerkschnittstelle mit der höchsten Priorität in den anderen gültigen Netzwerkschnittstellen als die Netzwerkschnittstelle, die umgeschaltet werden soll, umfasst:
wenn eine von der aktuell zugegriffenen gültigen Netzwerkschnittstelle unterstützte Bandbreite niedriger ist als eine von einem aktuellen Dienst benötigte Bandbreite, Beanspruchen einer Netzwerkschnittstelle mit der höchsten Priorität, die eine höhere Bandbreite als die vom aktuellen Dienst benötigte Bandbreite unterstützt, in den anderen gültigen Netzwerkschnittstellen als die Netzwerkschnittstelle, die umgeschaltet werden soll; oder,
wenn alle von gültigen Netzwerkschnittstellen unterstützten Bandbreiten höher sind als eine von einem aktuellen Dienst benötigte Bandbreite, Beanspruchen einer Schnittstelle, die ein Netzwerk mit einem niedrigsten Tarifstandard unterstützt, in den gültigen Netzwerkschnittstellen als die Netzwerkschnittstelle, die umgeschaltet werden soll; oder,
wenn alle von den gültigen Netzwerkschnittstellen unterstützten Bandbreiten höher sind als eine von einem aktuellen Dienst benötigte Bandbreite und die Tarifstandards von Netzwerken, die von den gültigen Netzwerkschnittstellen unterstützt werden, gleich sind, Beanspruchen einer Schnittstelle, die eine höchste Bandbreite unterstützt, in den gültigen Netzwerkschnittstellen als die Netzwerkschnittstelle, die umgeschaltet werden soll.

2. Umschaltverfahren nach Anspruch 1, bevor die Verbindungszustände der mindestens zwei Netzwerkschnittstellen erfasst werden, wobei das Verfahren ferner umfasst:
Erfassen, ob sich die mindestens zwei Netzwerkschnittstellen in einem verbindbaren Zustand befinden,
wobei der verbindbare Zustand umfasst: einen Zustand, in dem eine 2G/3G/4G-Kommunikationskarte eingesetzt wurde, oder einen Zustand, in dem ein drahtloses lokales Netzwerk, WLAN ein drahtloses Signal eines Zugriffspunktes ausfindig gemacht hat, oder einen Zustand, in dem eine drahtgebundene Schnittstelle verbunden wurde.

3. Umschaltverfahren nach Anspruch 1 oder 2, wobei das Bestimmen der gültigen Netzwerkschnittstellen umfasst:
Senden einer Anforderungsnachricht an eine Zugriffsnetzwerkseite; und
nachdem eine Antwortnachricht über die Anforderungsnachricht empfangen wird, die von der Zugriffsnetzwerkseite zurückgegeben wurde, Bestimmen, dass die erfassten Netzwerkschnittstellen die gültigen Netzwerkschnittstellen sind.

4. Umschaltverfahren nach Anspruch 1, wobei die Priorität der Netzwerkschnittstellen gemäß mindestens einer der folgenden Informationen bestimmt wird:
Bandbreiteninformationen der Netzwerkschnittstellen, Tarifstandardinformationen der von den Netzwerkschnittstellen unterstützten Netzwerke und Netzwerkmodusinformationen der von den Netzwerkschnittstellen unterstützten Netzwerke.

5. Umschaltverfahren nach Anspruch 2, wobei die Netzwerkschnittstellen umfassen: 2G/3G/4G-Schnittstellen, WLAN-Schnittstellen oder drahtgebundene Netzwerkschnittstellen.

6. Zugriffsvorrichtung, umfassend eine erste Erfassungseinheit und eine Umschalteinheit, wobei die erste Erfassungseinheit (21) dazu ausgelegt ist, verbundene Zustände von mindestens zwei Netzwerkschnittstellen zu erfassen, um gültige Netzwerkschnittstellen zu bestimmen; und
die Umschalteinheit (22) dazu ausgelegt ist, wenn bestimmt wird, dass die Priorität einer aktuell zugegriffenen gültigen Netzwerkschnittstelle niedriger ist als die Priorität anderer gültiger Netzwerkschnittstellen, eine Netzwerkschnittstellenumschaltung gemäß einer vorgegebenen Umschaltrichtlinie durchzuführen,
wobei die Umschalteinheit ferner dazu ausgelegt ist, eine Netzwerkschnittstelle mit der höchsten Priorität in den anderen gültigen Netzwerkschnittstellen als eine Netzwerkschnittstelle zu beanspruchen, die umgeschaltet werden soll, wenn bestimmt wird, dass die Priorität der aktuell zugegriffenen gültigen Netzwerkschnittstelle niedriger ist als die Priorität der anderen gültigen Netzwerkschnittstellen;
**dadurch gekennzeichnet, dass**
die Umschalteinheit ferner dazu ausgelegt ist, eine Netzwerkschnittstelle mit der höchsten Priorität, die eine Bandbreite unterstützt, die höher ist als die vom aktuellen Dienst benötigte Bandbreite, in den anderen gültigen Netzwerkschnittstellen als die Netzwerkschnittstelle zu beanspruchen, die umgeschaltet werden soll, wenn eine von der aktuell zugegriffenen gültigen Netzwerkschnittstelle unterstützte Bandbreite niedriger ist als eine von einem aktuellen Dienst benötigte Bandbreite: oder,
Beanspruchen einer Schnittstelle, die ein Netzwerk mit einem niedrigsten Tarifstandard unterstützt, in den gültigen Netzwerkschnittstellen als die Netzwerkschnittstelle, die umgeschaltet werden soll, wenn alle von den gültigen Netzwerkschnittstellen unterstützten Bandbreiten höher sind als eine von einem aktuellen Dienst benötigte Bandbreite; oder,
Beanspruchen einer Schnittstelle, die eine höchste Bandbreite unterstützt, in den gültigen Netzwerkschnittstellen als die Netzwerkschnittstelle, die umgeschaltet werden soll, wenn alle von den gültigen Netzwerkschnittstellen unterstützten Bandbreiten höher sind als eine von einem aktuellen Dienst benötigte Bandbreite und die Tarifstandards der von den gültigen Netzwerkschnittstellen unterstützten Netzwerke gleich sind.

7. Zugriffsvorrichtung nach Anspruch 6, ferner umfassend eine zweite Erfassungseinheit (23), die dazu ausgelegt ist, zu erfassen, ob sich die mindestens zwei Netzwerkschnittstellen in einem verbindbaren Zustand befinden, wobei der verbindbare Zustand umfasst: einen Zustand, in dem eine 2G/3G/4G-Kommunikationskarte eingesetzt wurde, oder einen Zustand, in dem ein drahtloses lokales Netzwerk, WLAN, ein drahtloses Signal eines Zugriffspunktes ausfindig gemacht hat, oder einen Zustand, in dem eine drahtgebundene Schnittstelle verbunden wurde.

8. Zugriffsvorrichtung nach Anspruch 6 oder 7, wobei die erste Erfassungseinheit (21) eine Sendeuntereinheit (211), eine Empfangsuntereinheit (212) und eine Bestimmungsuntereinheit (213) umfasst, wobei die Sendeuntereinheit dazu ausgelegt ist, eine Anforderungsnachricht an eine Zugriffsnetzwerkseite zu senden;
die Empfangsuntereinheit dazu ausgelegt ist, die Bestimmungsuntereinheit zu benachrichtigen, nachdem eine Antwortnachricht über die Anforderungsnachricht empfangen wird, die von der Zugriffsnetzwerkseite zurückgegeben wurde; und
die Bestimmungsuntereinheit dazu ausgelegt ist, zu bestimmen, dass die erfassten Netzwerkschnittstellen die gültigen Netzwerkschnittstellen sind, nachdem die Benachrichtigung von der Empfangsuntereinheit empfangen wurde.

9. Zugriffsvorrichtung nach Anspruch 6, wobei die Priorität der Netzwerkschnittstellen gemäß mindestens einer der folgenden Informationen bestimmt wird:
Bandbreiteninformationen der Netzwerkschnittstellen, Tarifstandardinformationen der von den Netzwerkschnittstellen unterstützten Netzwerke und Netzwerkmodusinformationen der von den Netzwerkschnittstellen unterstützten Netzwerke.

10. Zugriffsvorrichtung nach Anspruch 7, wobei die Netzwerkschnittstellen umfassen: 2G/3G/4G-Schnittstellen, WLAN-Schnittstellen oder drahtgebundene Netzwerkschnittstellen.

11. Computerspeichermedium, das computerausführbare Anweisungen speichert, die dazu ausgelegt sind, das Umschaltverfahren für die Netzwerkschnittstellen nach einem der Ansprüche 1 bis 5 auszuführen.

## Revendications

1. Procédé de commutation pour des interfaces réseau, applicable à un dispositif d'accès contenant au moins deux interfaces réseau, le procédé comprenant les étapes suivantes :
détecter (101) des états connectés desdites deux interfaces réseau afin de déterminer des interfaces réseau valides ; et
lorsqu'il est déterminé qu'une priorité d'une interface réseau valide accédée couramment est inférieure à une priorité d'autres interfaces réseau valides, exécuter (102) une commutation d'interface réseau selon une politique de commutation prédéfinie,
la politique de commutation prédéfinie comprenant : prendre une interface réseau de priorité la plus élevée dans les autres interfaces réseau valides comme une interface réseau devant être commutée ;
**caractérisé en ce que**,
l'étape consistant à prendre l'interface réseau de priorité la plus élevée dans les autres interfaces réseau valides comme l'interface réseau devant être commutée comprend :
lorsqu'une bande passante prise en charge par l'interface réseau valide couramment accédée est inférieure à une bande passante requise par un service courant, prendre une interface réseau de priorité la plus élevée, qui prend en charge une bande passante supérieure à la bande passante requise par le service courant, dans les autres interfaces réseau valides comme l'interface réseau devant être commutée ; ou,
lorsque des bandes passantes prises en charge par des interfaces réseau valides sont toutes supérieures à une bande passante requise par un service courant, prendre une interface, qui prend en charge un réseau avec un niveau de débit le plus faible, dans les interfaces réseau valides comme l'interface réseau devant être commutée ; ou,
lorsque des bandes passantes prises en charge par les interfaces réseau valides sont toutes supérieures à une bande passante requise par un service courant et que les niveaux de débit des réseaux pris en charge par les interfaces réseau valides sont les mêmes, prendre une interface, qui prend en charge une bande passante la plus élevée, dans les interfaces réseau valides comme l'interface réseau devant être commutée.

2. Procédé de commutation selon la revendication 1, avant que les états connectés desdites deux interfaces réseau ne soient détectés, le procédé comprenant en outre :
détecter si lesdites deux interfaces réseau sont dans un état connectable, l'état connectable comprenant : un état dans lequel une carte de communication 2G/3G/4G a été insérée, ou un état dans lequel un réseau local sans fil, WLAN, a recherché un signal sans fil d'un point d'accès, ou un état dans lequel une interface câblée a été connectée.

3. Procédé de commutation selon la revendication 1 ou 2, dans lequel l'étape de détermination des interfaces réseau valides comprend :
envoyer un message de requête à un côté de réseau d'accès ; et
après qu'un message de réponse concernant le message de requête retourné par le côté de réseau d'accès a été reçu, déterminer que les interfaces réseau détectées sont les interfaces réseau valides.

4. Procédé de commutation selon la revendication 1, dans lequel la priorité des interfaces réseau est déterminée selon au moins un élément parmi les informations suivantes :
des informations de bande passante des interfaces réseau, des informations de niveau de débit des réseaux pris en charge par les interfaces réseau, et des informations de mode de réseau des réseaux pris en charge par les interfaces réseau.

5. Procédé de commutation selon la revendication 2, dans lequel les interfaces réseau comprennent : des interfaces 2G/3G/4G, des interfaces WLAN ou des interfaces réseau câblées.

6. Dispositif d'accès, comprenant une première unité de détection et une unité de commutation, dans lequel :
la première unité de détection (21) est configurée pour détecter des états connectés d'au moins deux interfaces réseau afin de déterminer des interfaces réseau valides ; et
l'unité de commutation (22) est configurée pour exécuter, lors de la détermination qu'une priorité d'une interface réseau valide accédée couramment est inférieure à une priorité d'autres interfaces réseau valides, une commutation d'interface réseau selon une politique de commutation prédéfinie,
l'unité de commutation étant en outre configurée pour prendre une interface réseau de priorité la plus élevée dans les autres interfaces réseau valides comme une interface réseau devant être commutée lors de la détermination que la priorité de l'interface réseau valide couramment accédée est inférieure à la priorité des autres interfaces réseau valides ;
**caractérisé en ce que**,
l'unité de commutation est en outre configurée pour prendre une interface réseau de priorité la plus élevée, qui prend en charge une bande passante supérieure à la bande passante requise par le service courant, dans les autres interfaces réseau valides comme l'interface réseau devant être commutée lorsqu'une bande passante prise en charge par l'interface réseau valide couramment accédée est inférieure à une bande passante requise par un service courant ; ou,
prendre une interface, qui prend en charge un réseau avec un niveau de débit le plus faible, dans les interfaces réseau valides comme l'interface réseau devant être commutée lorsque des bandes passantes prises en charge par des interfaces réseau valides sont toutes supérieures à une bande passante requise par un service courant ; ou,
prendre une interface, qui prend en charge une bande passante la plus élevée, dans les interfaces réseau valides comme l'interface réseau devant être commutée lorsque des bandes passantes prises en charge par les interfaces réseau valides sont toutes supérieures à une bande passante requise par un service courant et que les niveaux de débit des réseaux pris en charge par les interfaces réseau valides sont les mêmes.

7. Dispositif d'accès selon la revendication 6, comprenant en outre une deuxième unité de détection (23) configurée pour détecter si lesdites deux interfaces réseau sont dans un état connectable, l'état connectable comprenant : un état dans lequel une carte de communication 2G/3G/4G a été insérée, ou un état dans lequel un réseau local sans fil, WLAN, a recherché un signal sans fil d'un point d'accès, ou un état dans lequel une interface câblée a été connectée.

8. Dispositif d'accès selon la revendication 6 ou 7 dans lequel la première unité de détection (21) comprend une sous-unité d'envoi (211), une sous-unité de réception (212) et une sous-unité de détermination (213),
la sous-unité d'envoi étant configurée pour envoyer un message de requête à un côté de réseau d'accès ;
la sous-unité de réception étant configurée pour notifier la sous-unité de détermination après qu'un message de réponse concernant le message de requête retourné par le côté de réseau d'accès a été reçu ; et
la sous-unité de détermination étant configurée pour déterminer que les interfaces réseau détectées sont les interfaces réseau valides après que la notification envoyée à partir de la sous-unité de réception a été reçue.

9. Dispositif d'accès selon la revendication 6, dans lequel la priorité des interfaces réseau est déterminée selon au moins un élément parmi les informations suivantes :
des informations de bande passante des interfaces réseau, des informations de niveau de débit des réseaux pris en charge par les interfaces réseau, et des informations de mode de réseau des réseaux pris en charge par les interfaces réseau.

10. Dispositif d'accès selon la revendication 7, dans lequel les interfaces réseau comprennent : des interfaces 2G/3G/4G, des interfaces WLAN ou des interfaces réseau câblées.

11. Support de stockage informatique, stockant des instructions exécutables par ordinateur configurées pour mettre en œuvre le procédé de commutation pour les interfaces réseau selon l'une quelconque des revendications 1 à 5.
